# EUROPÄISCHE PATENTSCHRIFT

(11) **EP 3 535 103 B1**
(45) Veröffentlichungstag und Bekanntmachung des Hinweises auf die Patenterteilung: **30.09.2020**
(21) Anmeldenummer: 17790792.0
(22) Anmeldetag: 31.10.2017
(51) Int. Cl.: B28D 7/02, B23Q 11/10, A47L 9/18, A47L 9/14, B01D 29/27, B24B 55/03

(54) **FILTERBEUTELERKENNUNG**
FILTER BAG DETECTION
RECONNAISSANCE DE SAC FILTRANT

(30) Priorität: 07.11.2016 EP 16197473
(43) Veröffentlichungstag der Anmeldung: 11.09.2019
(73) Patentinhaber: Hilti Aktiengesellschaft, 9494 Schaan (LI)
(72) Erfinder: RUPPRECHT, Hans, 81477 München (DE)
(74) Vertreter: Hilti Aktiengesellschaft Corporate Intellectual Property
(86) Internationale Anmeldenummer: PCT/EP2017/077855
(87) Internationale Veröffentlichungsnummer: WO 2018/083078

(56) Entgegenhaltungen:
- EP-A1- 2 636 351
- EP-A1- 2 960 012
- EP-A2- 1 752 077
- DE-A1-102006 035 345

## Beschreibung

Die vorliegende Erfindung betrifft ein Wasseraufbereitungsgerät mit einer Vorrichtung zum Erfassen einer Filtereinrichtung, wobei die Vorrichtung wenigstens einen Signalgeber und wenigstens einen Sensor zum Erfassen eines Signals des Signalgebers enthält, wobei das Wasseraufbereitungsgerät wenigstens in einem Arbeitsmodus oder Ruhemodus einstellbar ist. Anstelle des Wasseraufbereitungsgeräts kann auch ein Staubsauger verwendet werden.

Des Weiteren betrifft die Erfindung ein Wasseraufbereitungsgerät, das eine Filtereinrichtung sowie einen Saugkopf zur Verwendung in der Vorrichtung umfasst. Darüber hinaus betrifft die Erfindung ein Wasseraufbereitungsgerät, das ein System umfasst, wobei das System eine Filtereinrichtung sowie einen Saugkopf zur Verwendung in der Vorrichtung enthält. Wasseraufbereitungsgeräte stellen ein Wasserrecyclingsystem dar, bei dem Wasser in einem geschlossenen Kreislauf mit einer Kernbohrmaschine oder einer Kreissäge zirkuliert. Gemäß einer alternativen Arbeitsweise des Wasseraufbereitungsgerätes ist es jedoch auch möglich, dass Wasser nicht in einem Kreislauf mit den Werkzeugmaschinen zirkuliert, sondern lediglich von dem Wasseraufbereitungsgerät zu den Werkzeugmaschinen befördert wird. Bei der Verwendung von Kernbohrmaschinen oder Kreissägen zum Zerschneiden eines mineralischen Werkstoffs, beispielsweise Beton oder Stein, ist es notwendig das Werkzeug, d.h. die Bohrkrone oder das Sägeblatt, zu kühlen und zu spülen. Das Spülen des Werkzeugs dient dazu, Staub und Schlamm, der bei der Bearbeitung des Werkstoffs entsteht, von dem Werkzeug abzuwaschen. Für gewöhnlich wird das Werkzeug einer Kernbohrmaschine oder einer Kreissäge mit Wasser gekühlt und gespült. Das Wasser wird hierfür in einem Wasseraufbereitungsgerät zur Verfügung gestellt. In einem Aufnahmebehälter des Wasseraufbereitungsgeräts ist Wasser gespeichert. Mit Hilfe einer Wasserpumpe, die sich in einem sogenannten Saugkopf des Wasseraufbereitungsgeräts befindet und für gewöhnlich oberhalb des Wasserspeichers positioniert ist, wird das Wasser über eine Wasserleitung (Wasserschlauch) zu den Werkzeugen befördert. Das Wasser verläuft in einem Kreislauf, sodass das Wasser in einer zweiten Wasserleitung (Wasserschlauch) wieder zu dem Wasseraufbereitungsgerät zurückbefördert wird, nachdem die Werkzeuge (Bohrkrone oder Sägeblatt) gekühlt und gespült wurden. Durch das Kühlen und Spülen des Werkzeugs verschmutzt jedoch das Wasser mit Staub und Schlamm, der sich während der Bearbeitung des Werkstoffs bildet. Um die Komponenten und insbesondere die Pumpe des Wasseraufbereitungsgeräts nicht durch den Staub oder Schlamm zu beschädigen, muss das verschmutzte Wasser gefiltert werden. Hierzu befindet sich in dem Wasseraufbereitungsgerät eine Filtereinrichtung. Für gewöhnlich ist die Filtereinrichtung in Form eines Filterbeutels ausgestaltet, durch den das Wasser gefiltert wird, bevor es wieder in den Wasserspeicher gelangt und wieder von der Pumpe des Saugkopfes zu den Werkzeugen gefördert werden kann.

Um Beschädigungen an dem Wasseraufbereitungsgerät oder an einzelnen Komponenten des Wasseraufbereitungsgeräts, insbesondere der Pumpe, zu vermeiden, darf kein verschmutztes Wasser durch die Pumpe gefördert werden.

Bei den auf dem Markt befindlichen Wasseraufbereitungsgeräten bzw. bei den Wasseraufbereitungsgeräten gemäß dem Stand der Technik ist jedoch durchaus möglich, dass verschmutztes Wasser in die Pumpe gelangen kann, sodass diese beschädigt werden kann.

Beispielsweise wird in der EP 2 960 012 A1 eine automatische Regelung von Aggregaten einer Wasserversorgungsanlage offenbart.

Aufgabe der vorliegenden Erfindung ist es daher, das vorstehend genannte Problem zu lösen und insbesondere eine Vorrichtung zur Verfügung zur Verfügung zu stellen, mit der die Möglichkeit zum Beschädigen des Wasseraufbereitungsgeräts und insbesondere der Pumpe des Wasseraufbereitungsgeräts vermindert werden kann. Des Weiteren besteht die Aufgabe darin, eine Filtereinrichtung, einen Saugkopf und ein System enthaltend eine Filtereinrichtung sowie einen Saugkopf zur Verwendung in der erfindungsgemäßen Vorrichtung bereitzustellen.

Die Aufgabe wird gelöst durch den Gegenstand der unabhängigen Ansprüche. Vorteilhafte Ausführungsformen des erfindungsgemäßen Gegenstands sind in den abhängigen Ansprüchen enthalten.

Die Aufgabe wird dabei gelöst durch das Bereitstellen eines Wasseraufbereitungsgeräts mit einer Vorrichtung zum Erfassen einer Filtereinrichtung, wobei die Vorrichtung wenigstens einen Signalgeber und wenigstens einen Sensor zum Erfassen eines Signals des Signalgebers enthält, wobei das Wasseraufbereitungsgerät wenigstens in einem Arbeitsmodus oder Ruhemodus einstellbar ist.

Erfindungsgemäß ist vorgesehen, dass das Wasseraufbereitungsgerät so ausgestaltet ist, dass der Arbeitsmodus nur einstellbar ist, wenn wenigstens ein Signal, das von dem Signalgeber ausgesendet wird, von dem Sensor erfasst wird. Hierdurch kann sichergestellt werden, dass das Wasseraufbereitungsgerät nur in dem Arbeitsmodus, bei dem die Pumpe des Saukopfes Wasser pumpt, betrieben werden kann, wenn eine Filtereinrichtung in dem Wasseraufbereitungsgerät korrekt positioniert ist, wodurch nur gefiltertes Wasser in die Pumpe gelangt und die Wahrscheinlichkeit einer Beschädigung der Pumpe minimiert wird. Darüber hinaus wird dem Anwender des Wasseraufbereitungsgeräts hierdurch eine einfache und effektive Orientierungshilfe geboten, um die Filtereinrichtung korrekt im Inneren des Wasseraufbereitungsgeräts zu positionieren. Dadurch, dass die Wasseraufbereitungsgerät nicht von dem Ruhemodus in den Arbeitsmodus wechselt, kann der Anwender erkennen, dass sich entweder eine nicht ordnungsgemäße, d.h. ungeeignete Filtereinrichtung oder aber eine ordnungsgemäße Filtereinrichtung nicht korrekt in dem Wasseraufbereitungsgerät befindet und dies erst behoben werden muss, bevor das Wasseraufbereitungsgerät genutzt werden kann.

Gemäß einer vorteilhaften Ausführungsform der vorliegenden Erfindung kann es möglich sein, dass der Signalgeber an einer Flanscheinrichtung der Filtereinrichtung und der Sensor an einem Saugkopf des Wasseraufbereitungsgeräts positionierbar ist, sodass wenigstens ein Signal ausgesendet von dem Signalgeber von dem Sensor erfassbar ist. Hierdurch kann eine genaue Positionierung und damit die ordnungsgemäße Anordnung der Filtereinrichtung zu dem Saugkopf, in dem sich die zu schützende Pumpe befindet, sichergestellt werden.

Entsprechend einer weiteren vorteilhaften Ausführungsform der vorliegenden Erfindung kann es möglich sein, dass der Signalgeber in Form wenigstens eines Magneten und der Sensor in Form wenigstens eines Magnetsensors, insbesondere eines Hall-Sensors, ausgestaltet ist. Hierdurch werden auf einfache Art und Weise ein relativ kostengünstiger sowie zugleich zuverlässiger Signalgeber und Sensor bereitgestellt. Der Magnet kann in Form eines Dauermagneten ausgestaltet sein.

Gemäß einer vorteilhaften Ausführungsform der vorliegenden Erfindung kann es möglich sein, dass der Signalgeber eine kreisrunde Querschnittsfläche aufweist und die Flanscheinrichtung eine Aussparung mit einer kreisrunden Querschnittsfläche zur Aufnahme eines Einfüllstutzens des Saugkopfes aufweist, wobei der Signalgeber so an der Flanscheinrichtung positioniert ist, dass ein Mittelpunkt der Querschnittsfläche des Signalgebers in einem Abstand von 10 bis 20 mm, insbesondere 16 mm, in einer Richtung B sowie in einem Abstand von 40 bis 60 mm, insbesondere 50 mm, in einer Richtung E von einem Mittelpunkt der Querschnittsfläche der Aussparung entfernt ist. Hierdurch kann eine möglichst genaue Positionierung bzw. Anordnung der Aussparung der Filtereinrichtung zum Einfüllstutzen des Saugkopfes gewährleistet werden. Durch die genaue Positionierung bzw. Anordnung ist ein sicherer Halt und ein ordnungsgemäßes Befüllen der Filtereinrichtung gesichert, ohne dass verschmutztes Wasser an der Filtereinrichtung vorbei und in den Wasserspeicher mit gefiltertem Wasser gelangt.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: eine perspektivische Ansicht eines Wasseraufbereitungsgeräts mit einem Saugkopf und einem Wasserspeicher in einem demontierten Zustand;
- Fig. 2: eine perspektivische Ansicht des Saugkopfes des Wasseraufbereitungsgeräts;
- Fig. 3: eine perspektivische Ansicht des Wasserspeichers des Wasseraufbereitungsgeräts in einer ersten Ausrichtung;
- Fig. 4: eine perspektivische Ansicht des Wasserspeichers des Wasseraufbereitungsgeräts in einer zweiten Ausrichtung;
- Fig. 5: eine Filtereinrichtung in Form eines Filterbeutels zusammen mit einer Flanscheinrichtung und einer Flanschhalteeinrichtung;

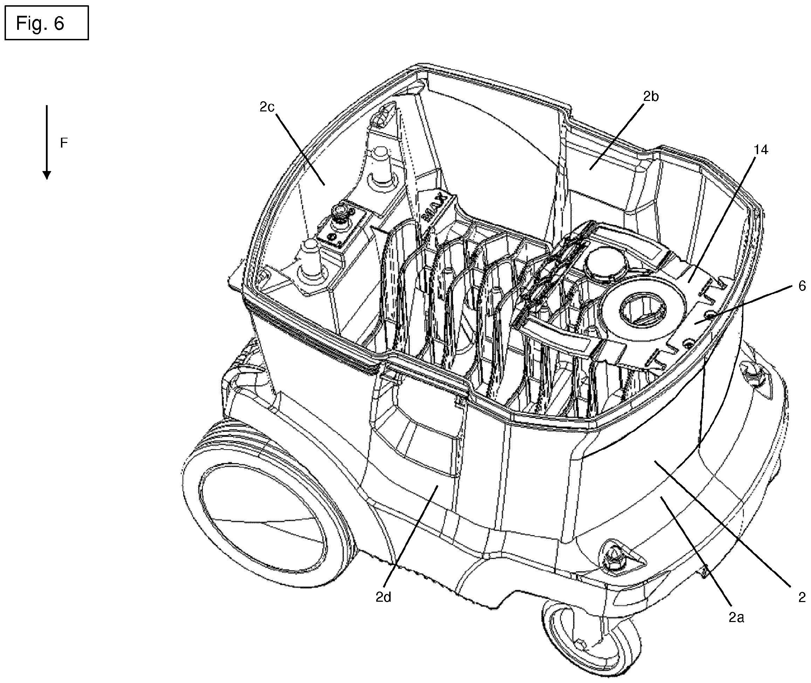

- Fig. 6: eine erste perspektivische Ansicht des Wasserspeichers zusammen mit einer Flanscheinrichtung der Filtereinrichtung;
- Fig. 7: eine zweite perspektivische Ansicht des Wasserspeichers zusammen mit einer Flanscheinrichtung der Filtereinrichtung;
- Fig. 8: eine erste Unteransicht eines Teils des Saugkopfes;
- Fig. 9: eine zweite Unteransicht eines Teils des Saugkopfes zusammen mit der Flanscheinrichtung der Filtereinrichtung;

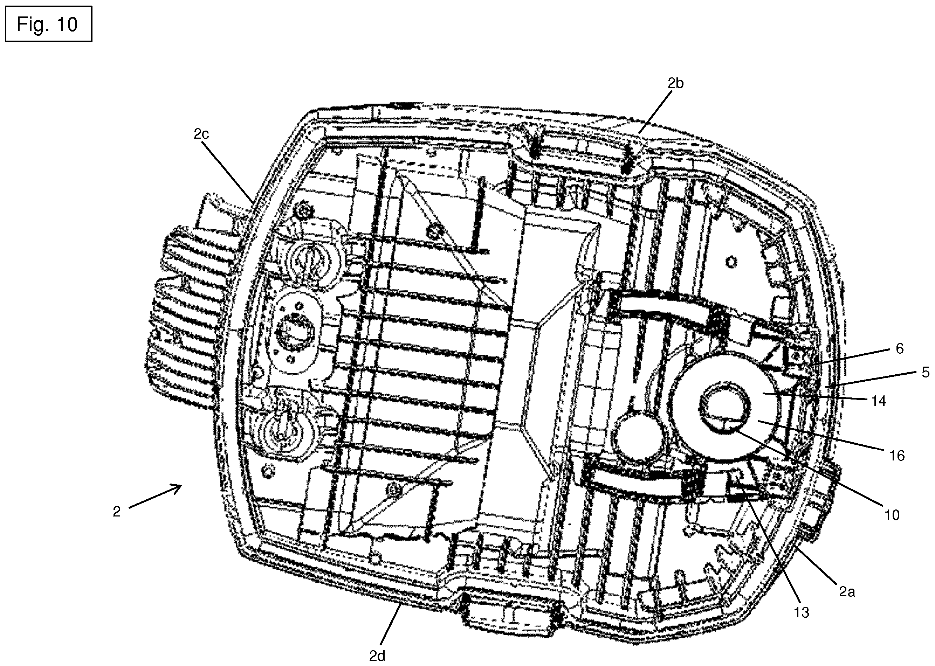

- Fig. 10: eine ganzheitliche Unteransicht auf den Saugkopf zusammen mit der Flanscheinrichtung der Filtereinrichtung;
- Fig. 11: eine Draufsicht auf die Flanscheinrichtung der Filtereinrichtung;
- Fig. 12: eine Unteransicht auf die Flanscheinrichtung der Filtereinrichtung;
- Fig. 13: eine perspektivische Ansicht auf die Oberseite der Flanscheinrichtung der Filtereinrichtung zusammen mit einer Flanschhalteeinrichtung;
- Fig. 14: eine perspektivische Ansicht auf die Unterseite der Flanscheinrichtung der Filtereinrichtung zusammen mit der Flanschhalteeinrichtung;
- Fig. 15: eine perspektivische Ansicht auf die Flanschhalteeinrichtung; und

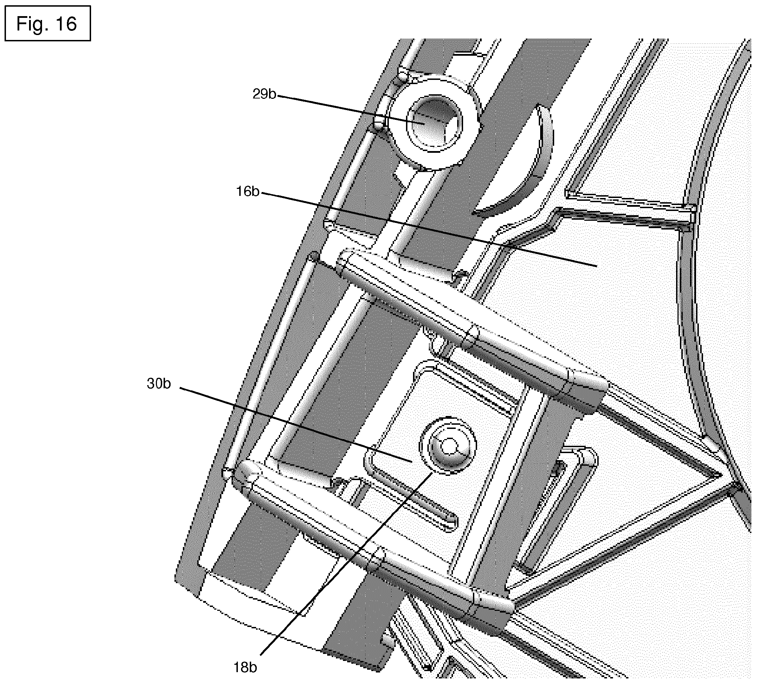

- Fig. 16: eine Detailansicht auf die Flanschhalteeinrichtung mit der Flanscheinrichtung.

### Ausführungsbeispiele:

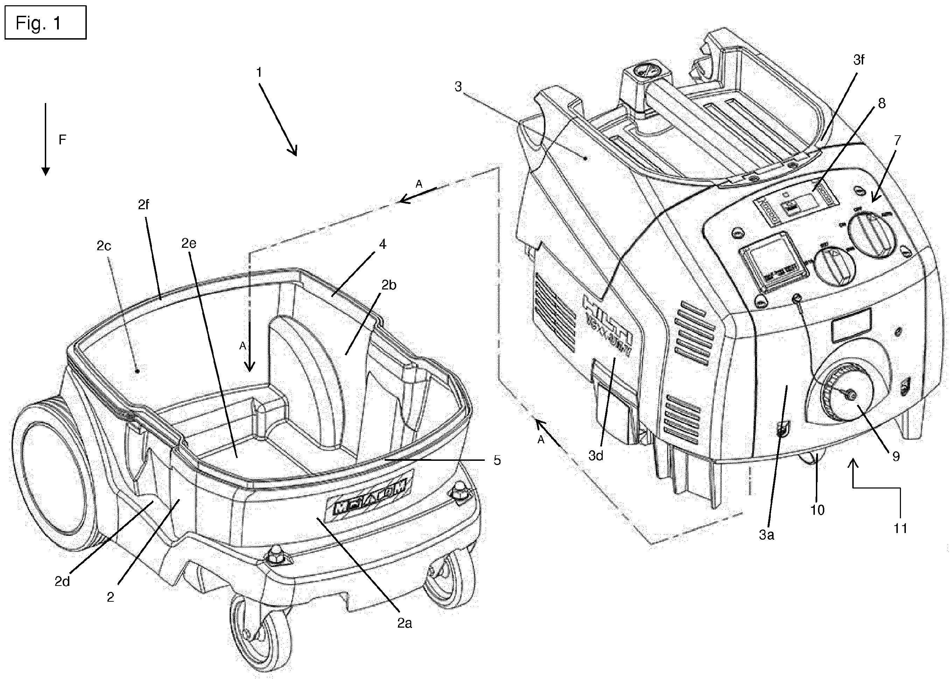

Fig. 1 zeigt ein Wasseraufbereitungsgerät 1 in einem demontierten bzw. auseinandergebauten Zustand. Das Wasseraufbereitungsgerät 1 enthält im Wesentlichen eine Vorrichtung A zum Erfassen einer Filtereinrichtung 14, einen Wasserspeicher 2 und einen Saugkopf 3. Der Saugkopf 3 kann auch als Gerätekopf bezeichnet werden.

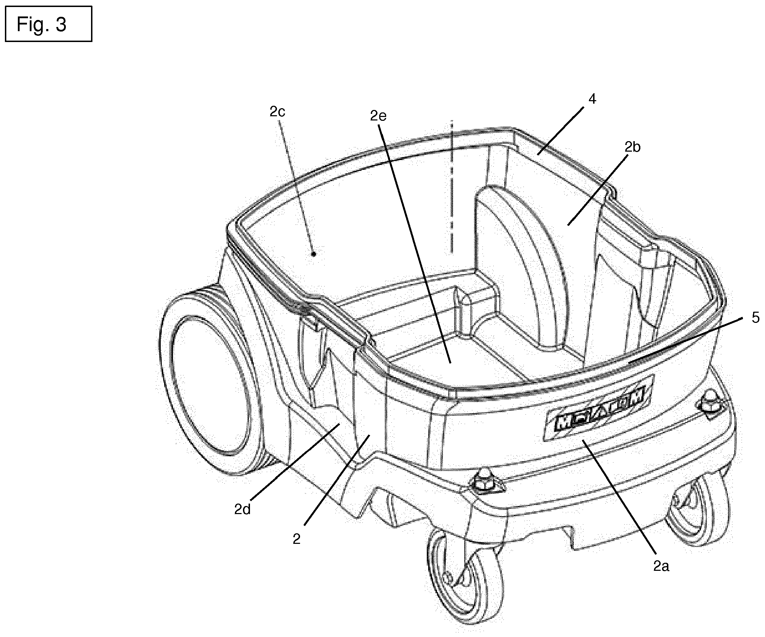

Wie in Fig. 1, 3 und 4 dargestellt, ist der Wasserspeicher 2 im Wesentlichen in Form einer Wanne ausgestaltet und dient dazu Wasser zu speichern bzw. aufzunehmen. Der Wasserspeicher 2 enthält eine erste, zweite, dritte, vierte Seitenwand 2a, 2b, 2c, 2d und einen Boden 2e. Des Weiteren enthält der Wasserspeicher 2 einen umlaufenden Rand 4. An der Innenseite der ersten Seitenwand 2a ist eine Aufnahmevorrichtung 5 für einen Flanschhalteeinrichtung 6 positioniert. Sowohl die Aufnahmevorrichtung 5 als auch die Flanschhalteeinrichtung 6 werden nachfolgend im Detail beschrieben.

An dem Boden 2e des Wasserspeichers 2 sind vier Räder vorgesehen, mit denen der Wasserspeicher 2 bzw. im zusammengebauten Zustand das gesamte Wasseraufbereitungsgerät 1 bewegt werden kann.

In dem zusammengebauten Zustand ist der Saugkopf 3 auf dem Wasserspeicher 2 positioniert und lösbar mit dem Wasserspeicher 2 verbunden.

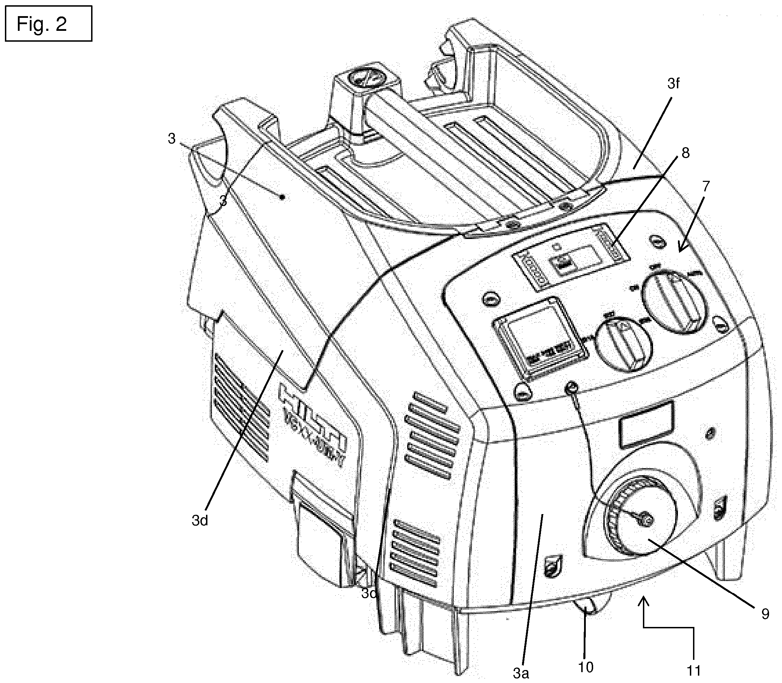

Wie in den Fig. 1 und 2 gezeigt, enthält der Saugkopf 3 eine erste, zweite, dritte, vierte Seitenwand 3a, 3b, 3c, 3d eine Unterseite 3e und einen Deckel 3f. Des Weiteren enthält der Saugkopf 3 eine Pumpe, mit der Wasser gepumpt werden kann. Es ist jedoch auch möglich, dass mehr als eine Pumpe in dem Wasseraufbereitungsgerät 1 enthalten ist. Die Pumpe ist in den Figuren nicht dargestellt. An der ersten Seitenwand 3a sind verschiedene Bedienelemente 7, eine Anzeigeeinrichtung 8 sowie ein Wasseranschluss 9 für das verschmutzte Wasser von den nicht gezeigten Werkzeugmaschinen vorgesehen. Der Wasseranschluss 9 führt zu einer (nicht dargestellten) Leitung, die schließlich in einen Einfüllstutzen 10 an der Unterseite 11 des Saugkopfes 3 mündet (vgl. Fig. 2).

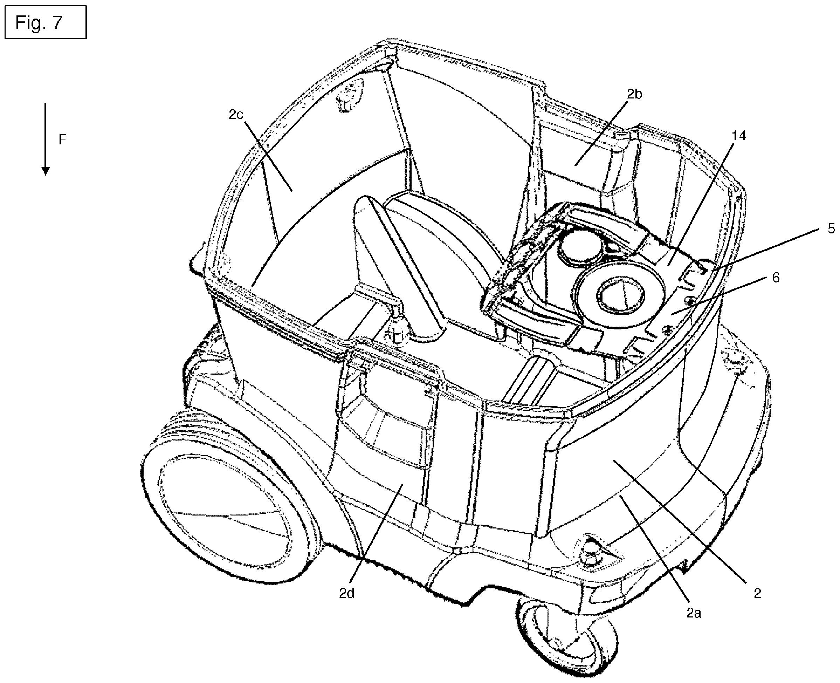

Wie in den Fig. 7, 8 und 9 gezeigt, ist der Einfüllstutzen 10 in Form eines zylindrischen Rohrs verwirklicht. Des Weiteren ist an der Unterseite 11 des Saugkopfes 3 ein Sensor 12 in Form eines Magnetsensors positioniert. Im gezeigten Ausführungsbeispiel handelt es sich bei dem Sensor 12 um einen Hall-Sensor. Der Sensor 12 dient dazu, ein Signal eines Magneten 13, d.h. ein von dem Magneten 13 erzeugtes Magnetfeld, zu erfassen und ist in Pfeilrichtung E neben dem Einfüllstutzen 10 positioniert. Der Sensor 12 ist mit einer nicht gezeigten Steuerungseinheit in dem Saugkopf 3 verbunden. Wenn der Sensor 12 das Signal (d.h. das Magnetfeld) des Magneten 13 erfasst bzw. empfängt, sendet der Sensor 12 das erfasste Signal an die Steuerungseinheit. Entsprechend dem empfangenen Signal, wird das Wasseraufbereitungsgerät 1 von der Steuerungseinheit entweder in einen Arbeitsmodus oder in einen Ruhemodus geschaltet. In dem Arbeitsmodus wird Wasser mit Hilfe der Pumpe aus dem Wasserspeicher 2 zu Werkzeugmaschinen, die mit dem Wasseraufbereitungsgerät 1 verbunden sind, gefördert. Anschließend wird das Wasser mit Hilfe der Pumpe wieder von den Werkzeugmaschinen zurückgefördert und in einer Filtereinrichtung 14 gefiltert.

Das gefilterte Wasser gelangt anschließend wieder in den Wasserspeicher 2, sodass das gefilterte Wasser wieder zu den Werkzeugenmaschinen gefördert werden kann. Das Wasser bewegt sich in einem Kreislauf zwischen den Werkzeugmaschinen und dem Wasseraufbereitungsgerät 1. In dem Ruhemodus wird kein Wasser von der Pumpe gefördert. Sowohl der Arbeitsmodus als auch der Ruhemodus wird an der Anzeigeeinrichtung 8 optisch und/oder akustisch angezeigt. Es ist jedoch auch möglich, dass das Wasseraufbereitungsgerät 1 zusätzliche Modi neben dem Arbeitsmodus und dem Ruhemodus enthält.

So ist es beispielsweise möglich, dass das Wasseraufbereitungsgerät 1 einen Modus aufweist, bei dem lediglich Wasser aus dem Wasserspeicher 2 zu den Werkzeugmaschinen gefördert wird, jedoch anschließend nicht zu dem Wasseraufbereitungsgerät 1 zurückbefördert wird. In diesem Modus ist keine Filtereinrichtung 14 in dem Wasseraufbereitungsgerät 1 notwendig.

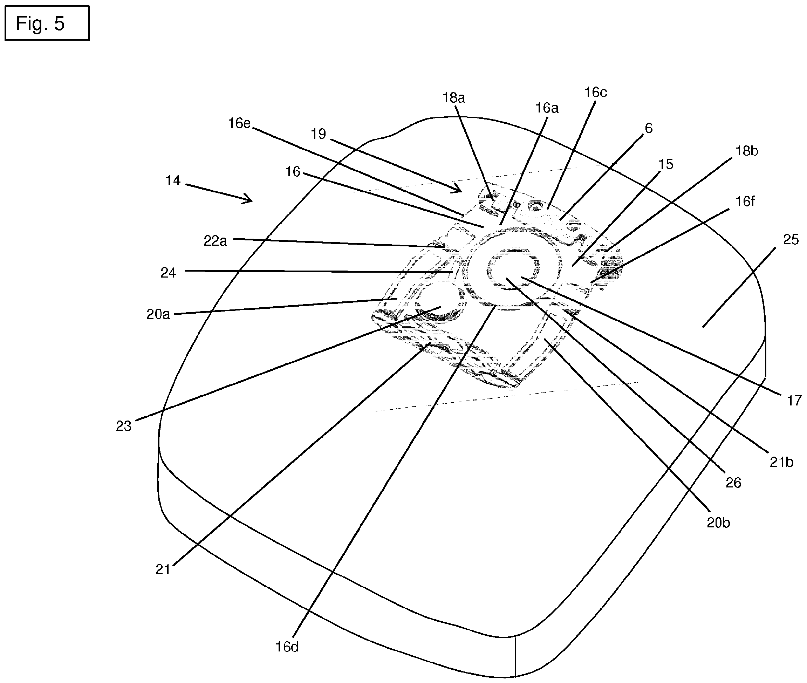

Im Inneren des Wasserspeichers 2 kann die Filtereinrichtung 14 positioniert werden. Wie in Fig. 5 gezeigt enthält die Filtereinrichtung 14 im Wesentlichen eine Flanscheinrichtung 15 und einen Filterbeutel 25. Der Filterbeutel 25 kann auch als Filtersack bezeichnet werden. Wie bereits vorstehend beschrieben dient die Filtereinrichtung 14 dazu, das Wasser zu filtern, welches von den Werkzeugmaschinen bzw. den Werkzeugen, z.B. Bohrkrone oder Sägeblatt, zurück in das Wasseraufbereitungsgerät 1 gefördert wird.

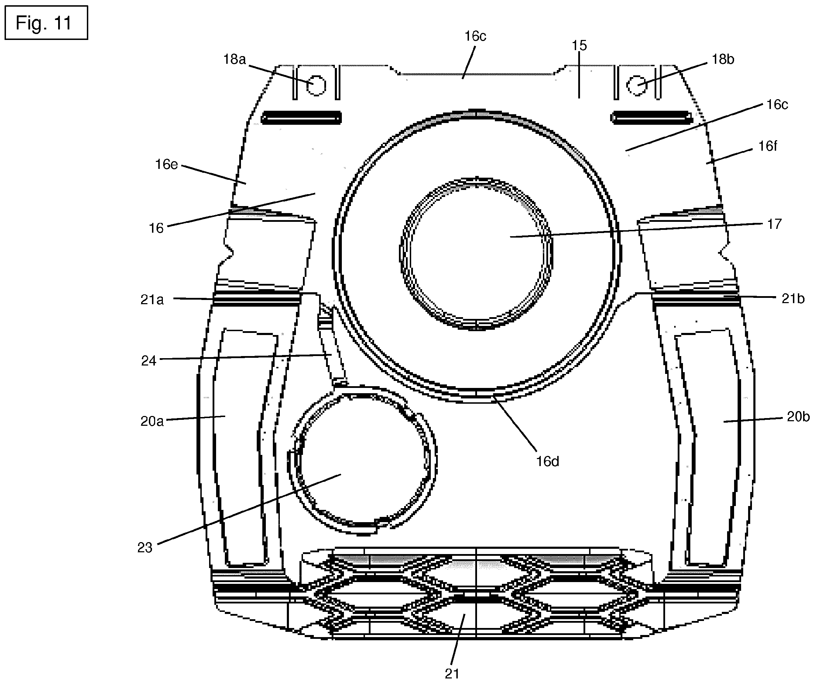

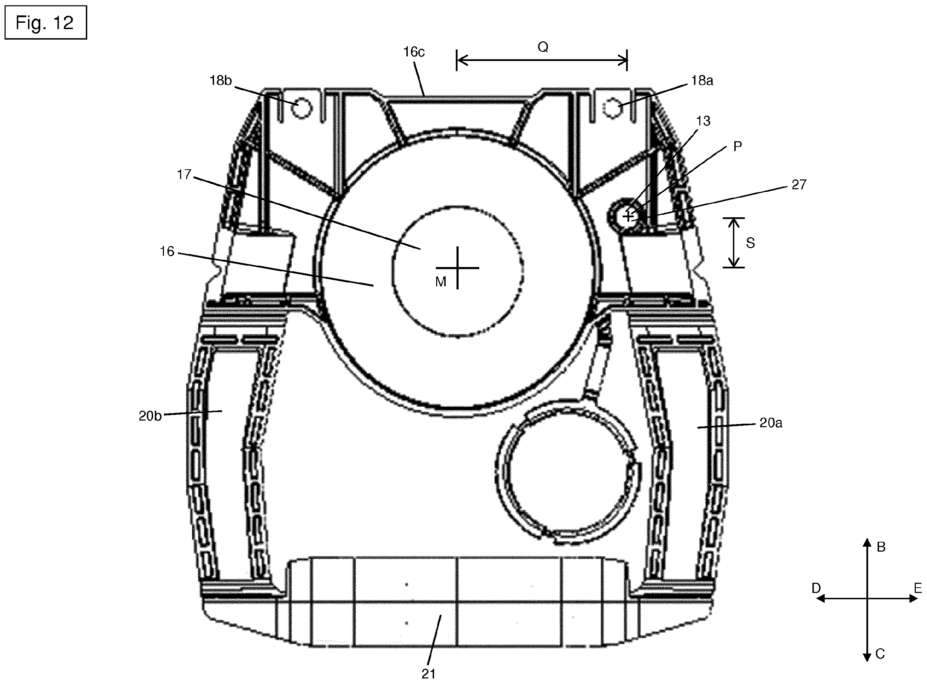

Wie in den Fig. 11 und 12 gezeigt, enthält die Flanscheinrichtung 15 im Wesentlichen eine Grundplatte 16 mit einer Oberseite 16a, einer Unterseite 16b, einer Vorderkante 16c, Hinterkante 16d, eine erste Seitenkante 16e und eine zweite Seitenkante 16f. In der Mitte der Grundplatte 16 befindet sich eine zentrale, kreisrunde Aussparung 17. Die Aussparung 17 kann auch als Loch bezeichnet werden. Die Aussparung 17 dient zur Aufnahme des Einfüllstutzens 10 des Saugkopfes 3, sodass über den Einfüllstutzen 10 und durch die Aussparung 17 das verschmutzte Wasser der Werkzeugmaschinen in die Filtereinrichtung 14 gelangen kann. An den beiden äußeren Enden der Vorderkante 16c sind ein erstes Anbindungselement 18a und ein zweites Anbindungselement 18b vorgesehen. Sowohl das erste als auch das zweite Anbindungselement 18a, 18b sind Bestandteil eines Verbindungssystems 19, mit dem die Flanscheinrichtung 15 der Filtereinrichtung 14 an die Flanschhalteeinrichtung 6 des Wasserspeichers 2 lösbar verbunden werden kann. Das Verbindungssystem 19 ist im Wesentlichen in Form einer Schnappverbindung ausgestaltet.

An den äußeren Enden der Hinterkante 16b der Grundplatte 16 sind ein erstes Armelement 20a und ein zweites Armelement 20b vorgesehen. Die jeweils freien Enden des ersten und zweiten Armelements 20a, 20b sind über ein Griffstück 21 miteinander verbunden. Das Griffstück 21 dient zum Tragen der Filtereinrichtung 14.

Sowohl das erste als auch das zweite Armelement 20a, 20b ist jeweils über ein erstes Scharnier 22a und zweites Scharnier 22b mit der Grundplatte 16 beweglich verbunden, sodass das erste Armelement 20a, zweite Armelement 20b sowie das Griffstück 21 um die Drehachse N in Pfeilrichtung R reversibel geschwenkt werden kann. Im vorliegenden Ausführungsbeispiel ist das erste und zweite Scharnier 22a, 22b als Filmscharnier ausgestaltet.

Des Weiteren ist an der Hinterkante 16d der Grundplatte 16 eine Verschlusskappe 23 zum wahlweisen Verschließen der Aussparung 17 mittels eines flexiblen Verbindungsstegs 24 befestigt. Die Verschlusskappe 23 dient insbesondere zum Verschließen einer gefüllten Filtereinrichtung 14.

Der Filterbeutel 25 ist aus einem flexiblen Stoff gefertigt, durch den Wasser aber keine Schmutzpartikel gelangen können. Der Filterbeutel 25 enthält eine kreisrunde Öffnung 26 und ist an der Unterseite 16b der Grundplatte 16 der Flanscheinrichtung 15 befestigt. Die Öffnung 26 dient zur Aufnahme des Einfüllstutzens 10 des Saugkopfes 3, sodass das verschmutzte Wasser in das Innere des Filterbeutels 25 gelangen kann. Die kreisrunde Öffnung 26 des Filterbeutels 25 ist dabei unterhalb der zentralen, kreisrunden Aussparung 17 der Grundplatte 16 angeordnet, sodass sich die Öffnung 26 und die Aussparung 17 überdecken. Die Öffnung 26 des Filterbeutels 25 ist dabei im Durchmesser kleiner als der Durchmesser der Aussparung 17 der Flanscheinrichtung 15. Der Durchmesser der Öffnung 26 entspricht dabei im Wesentlichen dem Durchmesser des Einfüllstutzens 10 des Saugkopfes 3. Das in die Aussparung 17 ragende Filterbeutelmaterial dient dabei als Abdichtung zwischen dem Einfüllstutzen 10 und der Aussparung 17 der Flanscheinrichtung 15, wenn die Filtereinrichtung 14 mit dem Saugkopf 3 verbunden ist.

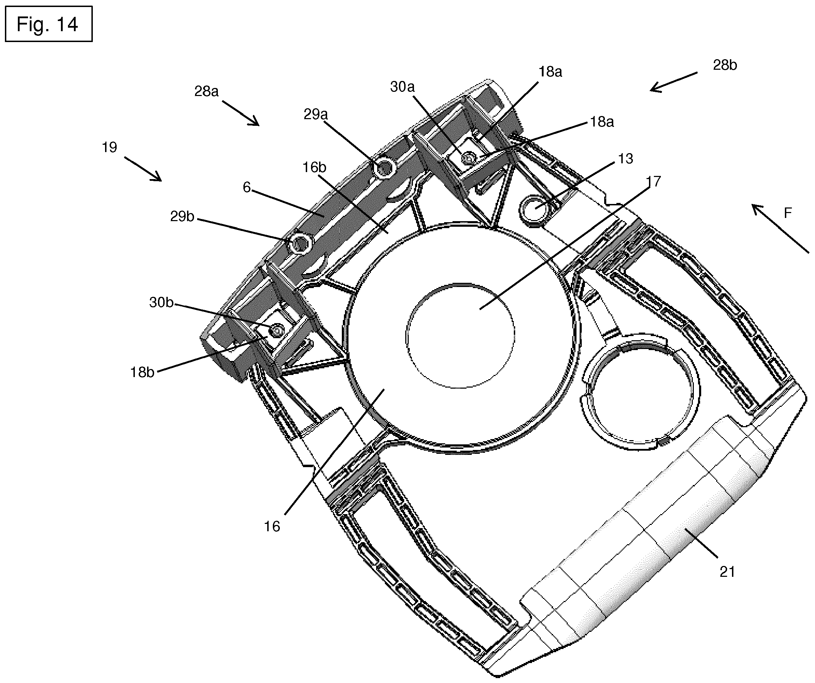

Wie in Fig. 12 und 14 gezeigt, enthält die Grundplatte 16 der Flanscheinrichtung 15 an der Unterseite 16b eine kreisrunde Aufnahme 27 für einen Signalgeber. Der Signalgeber ist in Form des kreisrunden Magneten 13 ausgestaltet und ist in der Aufnahme positioniert. Der als Magneten ausgestaltete Signalgeber 13 hat eine kreisrunde Querschnittsfläche und einen Mittelpunkt P. Die kreisrunde Aussparung 17 der Grundplatte 16 weist ebenfalls eine kreisrunde Querschnittsfläche auf mit einem Mittelpunkt M. Der Mittelpunkt P weist einen Abstand von 16 mm in Pfeilrichtung B, d.h. Wegstrecke S, und einen Abstand von 50 mm in Pfeilrichtung D, d.h. Wegstrecke Q, zu dem Mittelpunkt M auf. In einem zusammengebauten Zustand, d.h. wenn sich die Filtereinrichtung 14 in dem Wasserspeicher befindet und sich der Saugkopf 3 auf dem Wasserspeicher 2 befindet, ist der Magnet in Richtung F unterhalb von dem Sensor 12 des Saugkopfs 3 positioniert, sodass der Sensor 12 den Magneten bzw. Signale des Magneten 13 erfassen kann.

Die Stärke der Grundplatte 16 und die magnetische Kraft des Magneten 13 sind dabei so gewählt, dass das Magnetfeld des Magneten 13 durch die Grundplatte 16 hindurch und in ausreichender Stärke zu dem Sensor 12 gelangen kann.

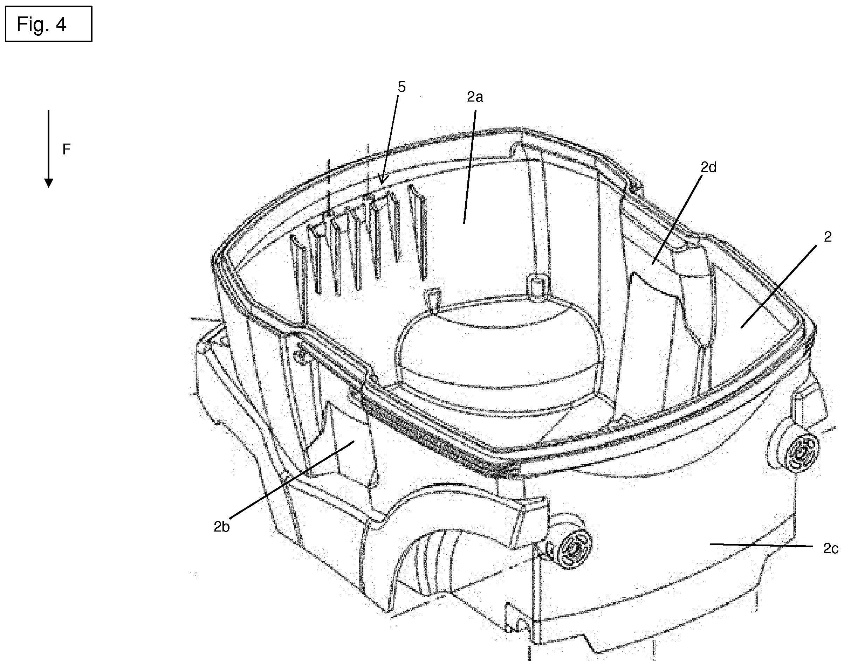

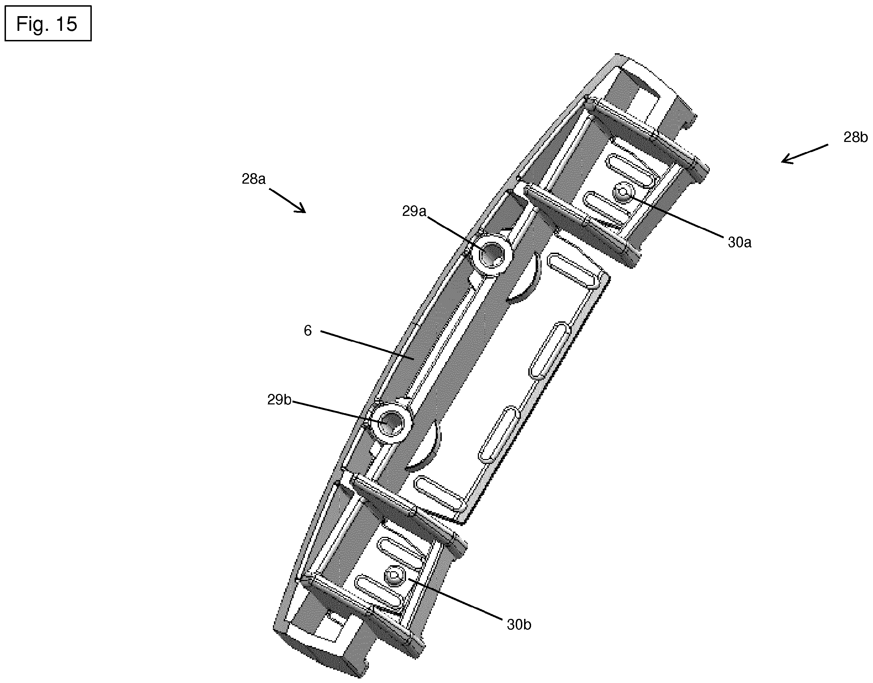

Wie in Fig. 15 gezeigt, enthält die Flanschhalteeinrichtung 6 eine erste Halteeinrichtung 28a und eine zweite Halteeinrichtung 28b. Die erste Halteeinrichtung 28a enthält zwei Aufnahmeelemente 29a, 29b und dient zur Befestigung an der Aufnahmevorrichtung 5 (vgl. Fig. 4). Die zwei Aufnahmeelemente 29a, 29b werden in zwei entsprechende Stifte der Aufnahmevorrichtung 5 in Pfeilrichtung F gesteckt. Die zweite Halteeinrichtung 28b weist zwei Aufnahmeelemente 30a, 30b auf, in die jeweils das erste und zweite Anbindungselement 18a, 18b positioniert werden kann. Die zwei Aufnahmeelemente 29a, 29b sind ebenfalls Bestandteil des zuvor beschriebenen Verbindungssystems 19, mit dem die Flanscheinrichtung 15 der Filtereinrichtung 14 an die Flanschhalteeinrichtung 6 des Wasserspeichers 2 lösbar verbunden werden kann.

### Montage und Funktionsweise der Filtereinrichtung:

Um die Filtereinrichtung 14 in dem Wasseraufbereitungsgerät 1 zu positionieren, wird zunächst der Saugkopf 3 von dem Wasserspeicher 2 entfernt (vgl. Fig. 1).

Die Flanschhalteeinrichtung 6 ist an der Aufnahmevorrichtung 5 in Pfeilrichtung F gesteckt.

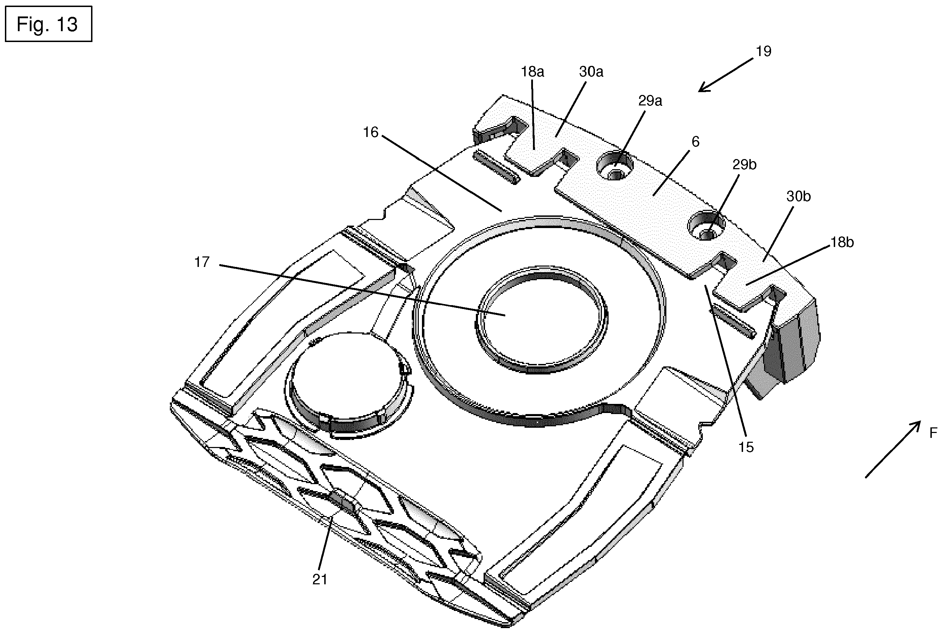

Die Flanscheinrichtung 15 der Filtereinrichtung 14 wird an der Flanschhalteeinrichtung 6 befestigt. In den Fig. 13 und 14 ist die Flanscheinrichtung 15 in einem zusammengesteckten Zustand mit der Flanschhalteeinrichtung 6. Die Filtereinrichtung 14 befindet sich damit im Wasserspeicher 2.

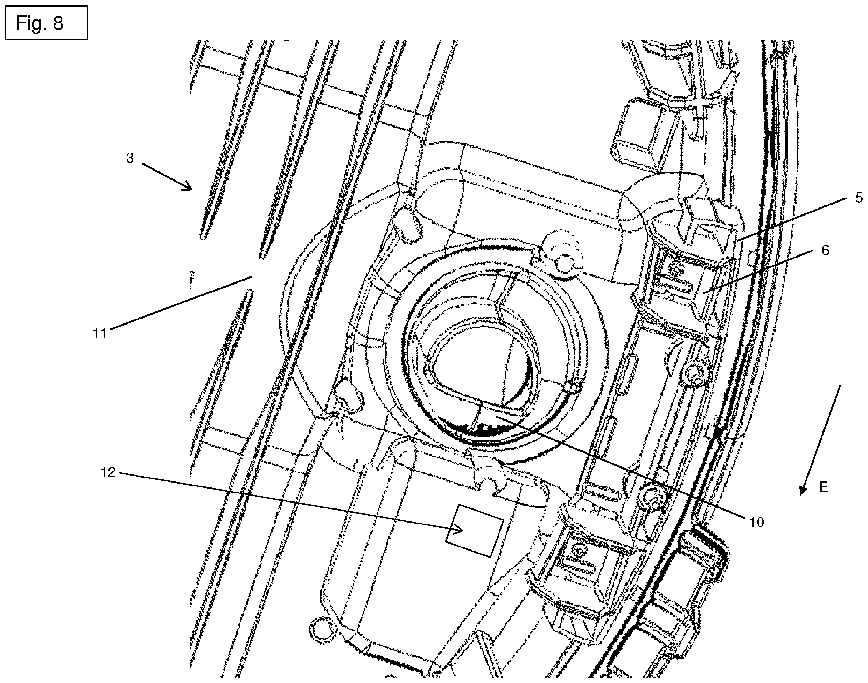

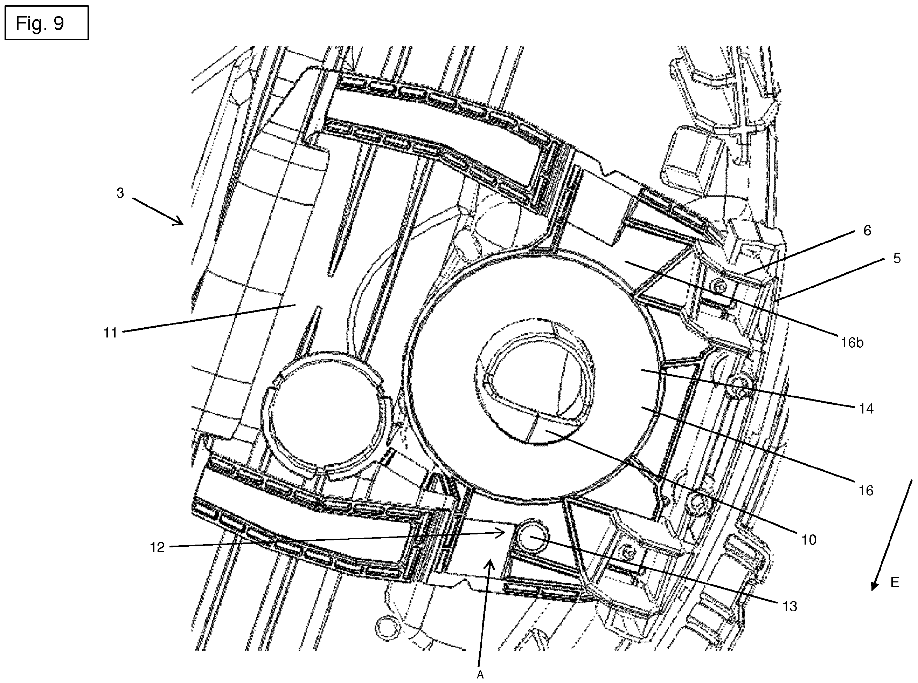

Anschließend wir der Saugkopf 3 wieder auf den Wasserspeicher 2 positioniert und befestigt. Der Sensor 12 in dem Saugkopf 3 befindet sich im zusammengebauten Zustand des Wasseraufbereitungsgeräts 1 entgegen der Pfeilrichtung F oberhalb des Magneten 13 (vgl. Fig. 8 und 9), um die Signale des Magneten 13, d.h. das Magnetfeld, zu erfassen. Wenn das Magnetfeld, d.h. Signal, des Magneten von dem Sensor 12 erfasst wird, wird ein entsprechendes Signal an die Steuerungseinheit gesendet und der Arbeitsmodus für das Wasseraufbereitungsgerät 1 wird eingestellt.

Wenn kein Signal von dem Sensor 12 erfasst wird, wird kein entsprechendes Signal an die Steuerungseinheit gesendet und der Ruhemodus für das Wasseraufbereitungsgerät 1 wird eingestellt.

## Patentansprüche

1. Wasseraufbereitungsgerät (1) mit einer Vorrichtung (A) zum Erfassen einer Filtereinrichtung (14), wobei die Vorrichtung (A) wenigstens einen Signalgeber (13) und wenigstens einen Sensor (12) zum Erfassen eines Signals des Signalgebers (13) enthält, wobei das Wasseraufbereitungsgerät (1) wenigstens in einem Arbeitsmodus oder Ruhemodus einstellbar ist,
**dadurch gekennzeichnet, dass** das Wasseraufbereitungsgerät (1) so ausgestaltet ist, dass der Arbeitsmodus nur einstellbar ist, wenn wenigstens ein Signal, das von dem Signalgeber (13) ausgesendet wird, von dem Sensor (12) erfasst wird.

2. Wasseraufbereitungsgerät (1) nach Anspruch 1,
**dadurch gekennzeichnet, dass** der Signalgeber (13) an einer Flanscheinrichtung (15) der Filtereinrichtung (14) und der Sensor (12) an einem Saugkopf (3) des Wasseraufbereitungsgeräts (1) positionierbar ist, sodass wenigstens ein Signal ausgesendet von dem Signalgeber (13) von dem Sensor (12) erfassbar ist.

3. Wasseraufbereitungsgerät (1) nach Anspruch 2,
**dadurch gekennzeichnet, dass** der Signalgeber (13) in Form wenigstens eines Magneten und der Sensor (12) in Form wenigstens eines Magnetsensors, insbesondere eines Hall-Sensors, ausgestaltet ist.

4. Wasseraufbereitungsgerät (1) nach wenigstens einem der Ansprüche 1 bis 3,
**dadurch gekennzeichnet, dass** der Signalgeber (13) eine kreisrunde Querschnittsfläche aufweist und die Flanscheinrichtung (15) eine Aussparung (17) mit einer kreisrunden Querschnittsfläche zur Aufnahme eines Einfüllstutzens (10) des Saugkopfes (3) aufweist, wobei der Signalgeber (13) so an der Flanscheinrichtung (15) positioniert ist, dass ein Mittelpunkt (P) der Querschnittsfläche des Signalgebers (13) in einem Abstand von 10 bis 20 mm, insbesondere 16 mm, in einer Richtung (B) sowie in einem Abstand von 40 bis 60 mm, insbesondere 50 mm, in einer Richtung (E) von einem Mittelpunkt (M) der Querschnittsfläche der Aussparung (17) entfernt ist.

5. Wasseraufbereitungsgerät (1) nach wenigstens einem der Ansprüche 1 bis 4, wobei das Wasseraufbereitungsgerät (1) eine Filtereinrichtung (14) zur Verwendung in einer Vorrichtung (A) umfasst.

6. Wasseraufbereitungsgerät (1) nach wenigstens einem der Ansprüche 1 bis 4, wobei das Wasseraufbereitungsgerät (1) einen Saugkopf (3) zur Verwendung in einer Vorrichtung (A) umfasst.

7. Wasseraufbereitungsgerät (1) nach wenigstens einem der Ansprüche 1 bis 4, wobei das Wasseraufbereitungsgerät (1) ein System umfasst, das eine Filtereinrichtung (14) und einen Saugkopf (3) zur Verwendung in einer Vorrichtung (A) enthält.

## Claims

1. Water treatment unit (1) having an apparatus (A) for sensing a filter device (14), wherein the apparatus (A) contains at least one signal transducer (13) and at least one sensor (12) for sensing a signal from the signal transducer (13), wherein the water treatment unit (1) can be set at least in an operating mode or an idle mode,
**characterized in that** the water treatment unit (1) is configured in such a manner that the operating mode can be set only if at least one signal which is emitted by the signal transducer (13) is sensed by the sensor (12).

2. Water treatment unit (1) according to Claim 1,
**characterized in that** the signal transducer (13) can be positioned on a flange device (15) of the filter device (14) and the sensor (12) can be positioned on a suction head (3) of the water treatment unit (1), with the result that at least one signal emitted by the signal transducer (13) can be sensed by the sensor (12).

3. Water treatment unit (1) according to Claim 2,
**characterized in that** the signal transducer (13) is in the form of at least one magnet and the sensor (12) is in the form of at least one magnetic sensor, in particular a Hall sensor.

4. Water treatment unit (1) according to at least one of Claims 1 to 3,
**characterized in that** the signal transducer (13) has a circular cross-sectional area and the flange device (15) has a recess (17) with a circular cross-sectional area for accommodating a filler neck (10) of the suction head (3), wherein the signal transducer (13) is positioned on the flange device (15) in such a manner that a centre point (P) of the cross-sectional area of the signal transducer (13) is at a distance of 10 to 20 mm, in particular 16 mm, away from a centre point (M) of the cross-sectional area of the recess (17) in a direction (B) and is at a distance of 40 to 60 mm, in particular 50 mm, away from a centre point (M) of the cross-sectional area of the recess (17) in a direction (E).

5. Water treatment unit (1) according to at least one of Claims 1 to 4, wherein the water treatment unit (1) comprises a filter device (14) for use in an apparatus (A).

6. Water treatment unit (1) according to at least one of Claims 1 to 4, wherein the water treatment unit (1) comprises a suction head (3) for use in an apparatus (A).

7. Water treatment unit (1) according to at least one of Claims 1 to 4, wherein the water treatment unit (1) comprises a system containing a filter device (14) and a suction head (3) for use in an apparatus (A).

## Revendications

1. Appareil de préparation de l'eau (1) comportant un dispositif (A) pour détecter un dispositif filtrant (14), dans lequel le dispositif (A) contient au moins un émetteur de signaux (13) et au moins un capteur (12) pour détecter un signal de l'émetteur de signaux (13), dans lequel l'appareil de préparation de l'eau (1) peut être réglé au moins dans un mode de travail ou dans un mode de repos,
**caractérisé en ce que** l'appareil de préparation de l'eau (1) est conçu de sorte que le mode de travail peut être réglé uniquement si au moins un signal émis par l'émetteur de signaux (13) est détecté par le capteur (12).

2. Appareil de préparation de l'eau (1) selon la revendication 1,
**caractérisé en ce que** l'émetteur de signaux (13) peut être positionné sur un dispositif à bride (15) du dispositif de filtrage (14) et le capteur (12) peut être positionné sur une tête d'aspiration (3) de l'appareil de préparation de l'eau (1), de sorte qu'au moins un signal émis par l'émetteur de signaux (13) peut être détecté par le capteur (12).

3. Appareil de préparation de l'eau (1) selon la revendication 2,
**caractérisé en ce que** l'émetteur de signaux (13) est réalisé sous la forme d'au moins un aimant et le capteur (12) est réalisé sous la forme d'au moins un capteur magnétique, en particulier d'un capteur à effet Hall.

4. Appareil de préparation d'eau (1) selon au moins l'une des revendications 1 à 3, **caractérisé en ce que** l'émetteur de signaux (13) présente une section transversale circulaire et le dispositif à bride (15) présente un évidement (17) de section transversale circulaire pour recevoir un embout de remplissage (10) de la tête d'aspiration (3), dans lequel l'émetteur de signaux (13) est positionné sur le dispositif à bride (15) de sorte qu'un point central (P) de la surface de section transversale de l'émetteur de signaux (13) se trouve à une distance allant de 10 à 20 mm, en particulier 16 mm, dans une direction (B) et à une distance allant de 40 à 60 mm, en particulier 50 mm, dans une direction (E) d'un point central (M) de la surface de section transversale de l'évidement (17).

5. Appareil de préparation de l'eau (1) selon au moins l'une des revendications 1 à 4, dans lequel l'appareil de préparation de l'eau (1) comprend un dispositif de filtrage (14) à utiliser dans un dispositif (A).

6. Appareil de préparation de l'eau (1) selon au moins l'une des revendications 1 à 4, dans lequel l'appareil de préparation de l'eau (1) comprend une tête d'aspiration (3) à utiliser dans un dispositif (A).

7. Appareil de préparation de l'eau (1) selon au moins l'une des revendications 1 à 4, dans lequel l'appareil de préparation de l'eau (1) comprend un système qui contient un dispositif de filtrage (14) et une tête d'aspiration (3) à utiliser dans un dispositif (A).
